# EUROPEAN PATENT SPECIFICATION

(11) **EP 3 056 431 B1**
(45) Date of publication and mention of the grant of the patent: **10.07.2019**
(21) Application number: 15190370.5
(22) Date of filing: 19.10.2015
(51) Int. Cl.: B64D 13/00, B64D 13/06

(54) **OXYGEN ENRICHED USER COMPARTMENT ON AN AIRCRAFT**
MIT SAUERSTOFF ANGEREICHERTES ABTEIL EINES FLUGZEUGS
COMPARTIMENT D'UTILISATEUR ENRICHI EN OXYGÈNE DANS UN AÉRONEF

(30) Priority: 12.02.2015 US 201514620553
(43) Date of publication of application: 17.08.2016
(73) Proprietor: The Boeing Company, Chicago, IL 60606-1596 (US)
(72) Inventor: Armatorio, Andrew L., Seattle, WA 98124-2207 (US); Loftis, Richard J., Arlington, WA 98223 (US); Hart, Colin W., Everett, WA 98208 (US); Thomas, Lisa C., Kirkland, WA 98034 (US); Price, Kevin R., Seattle, 98124 (US)
(74) Representative: Witte, Weller & Partner Patentanwälte mbB

(56) References cited:
- EP-A2- 2 803 582
- DE-A1-102007 018 773
- US-A1- 2007 062 371

## Description

### FIELD

The present disclosure relates to aircraft and controlling the atmospheric conditions within an aircraft, and more particularly to oxygen enriched user compartments on an aircraft for reducing the effective altitude experienced by the user.

### BACKGROUND

As altitude increases, atmospheric pressure decreases. Low pressure areas (i.e. at high altitudes) have less atmospheric mass, whereas higher pressure areas have greater atmospheric mass. Therefore, most modern aircraft and in particular, commercial passenger aircraft have pressurized cabins that reduce the effective altitude experienced within the aircraft while flying at higher altitudes. When an aircraft's cabin and flight deck's effective altitudes are reduced, the total pressure of the interior of the aircraft is increased. This leads to a higher differential pressure between the inside and outside of the aircraft, with the stress becoming greater as the differential pressure increases. In order to reduce the effective altitude within the airplane, either the structure of the aircraft would need to be redesigned or adjusted to safely withstand the higher pressure, or the aircraft would need to be flown at a lower altitude. Also, aircraft flown at higher differential pressures require increased maintenance and inspection, which will result in increased cost. Due to the stress increase on the aircraft hull as the differential pressure increases, there is a limitation on the amount the total pressure of air can be increased within the aircraft. In order to reduce the altitude in this classical sense, either the structure of the aircraft would need to be redesigned to safely withstand the higher pressure, or the aircraft flown at a lower altitude.

The effective altitude within the aircraft experienced by users such as passengers, at selected locations on the aircraft, can be reduced, without increasing the total pressure, by increasing the oxygen partial pressure in those locations, to an equivalent lower altitude value. Low oxygen and humidity levels which may be encountered during flight at increased effective cabin altitudes in an aircraft, may contribute to various adverse health effects, including light-headedness, loss of appetite, shallow breathing and difficulty in concentrating. For example, ascent from ground level to 8000 ft. pressure altitude lowers oxygen saturation in the blood by ∼4% (e.g. Muhm 2007). Dehydration is another adverse health effect, due to the dryness of the air. A human's preferred level is approximately 40-60% relative humidity, and in-flight humidity can drop below 10%. A dry thin atmosphere can also cause disturbed sleep patterns and can result in lack of energy, headaches, nausea, and loss of appetite.

Many commercial and other aircraft are equipped with nitrogen generating systems (NGS) to generate nitrogen enriched air that is channeled into parts of the aircraft, such as fuel tanks, for creating an inert atmosphere. The nitrogen generating system also produces oxygen enriched air. However, the oxygen enriched air from the current nitrogen generating system is dumped overboard. The nitrogen generating system receives bleed air flowing from at least one engine of the aircraft or an onboard compressor for airplane configurations that do not use engine bleed air. During flight phases for which the NGS is operating, a large portion of the bleed air flow used in the nitrogen generating system is discarded in the form of oxygen enriched air.

A typical in-flight environment where there is reduced altitude during cruise contributes to various adverse health effects resulting from low oxygen levels, which can result in light-headedness, difficulty in concentrating, shallow breathing. Ascent from ground level to 8000 ft lowers oxygen saturation by ∼4% (e.g. Muhm 2007). Dehydration is another adverse health effect due to the dryness of the air. A human's preferred level is about approximately 40-60% relative humidity, and in-flight humidity can drop below 10%, A dry thin atmosphere can also cause disturbed sleep patterns and can result in lack of energy, headaches, nausea, and loss of appetite.

The document EP 2 803 582 A2 discloses an aircraft air supply system for reducing an effective altitude of a flight deck. The document US 2007/0062371 A1 discloses system and method for enriching aircraft cabin air with oxygen from a nitrogen generation system.

### SUMMARY

It is disclosed a system for providing an oxygen enriched localized user environment in a user compartment on an aircraft having a passenger cabin comprising: a gas separation system having an oxygen output channel for outputting a flow of oxygen enriched air, wherein the gas separation system is a nitrogen generation system; and a partially, or fully, enclosed user compartment for a selected passenger, the user compartment having a user support device and an oxygen enriched air dispenser, wherein the user compartment includes a user-operable control for regulating the flow of oxygen enriched air; and a duct network coupled to the oxygen output channel and comprising a manifold, the duct network being configured to direct the flow of oxygen enriched air through the manifold to the dispenser, which dispenser is configured to receive and dispense the flow of oxygen enriched air to a localized volume in the user compartment thereby increasing the partial pressure of oxygen in the user compartment.

Further it is disclosed a method for providing an oxygen enriched localized environment in a user compartment on an aircraft having a passenger cabin comprising: directing a flow of oxygen enriched air from an oxygen output of a gas separation system, wherein the gas separation system is a nitrogen generation system, through a duct network via a manifold to an oxygen enriched air dispenser, wherein the dispenser receives and dispenses the flow of oxygen enriched air to a localized volume in a partially, or fully, enclosed user compartment for a selected passenger, thereby increasing the partial pressure of oxygen in the user compartment, wherein the enclosed user compartment has a user support device and the oxygen enriched air dispenser, and wherein the enclosed user compartment includes a user-operable control for regulating the flow of oxygen enriched air.

The apparatus and method can reduce the effects of exposure to low atmospheric pressure and low humidity. The apparatus and method can also increase humidity in addition to increasing oxygen partial pressure. The user compartment can be partially or fully enclosed. One implementation of the system can be designed to boost oxygen and humidity levels for selected passengers via an enclosed user compartment, referred to as modules. In addition to the enclosed user compartment configuration, other implementations of the technology can include one or more of oxygen enriched venting to a head area, a mask, or a hood in the user area. The user compartment can have a user support which includes one or more of a seat, a bench, a foot rest and a bed.

The environment can increase oxygen in the localized volume within the user compartment at high altitude and can improve sleep quality. Altitude chamber tests show that because the body absorbs more oxygen into the blood at lower altitudes, passengers experience fewer headaches and less dizziness and fatigue.

The Oxy-Pods may reduce the unpleasant physiological effect of lower pressure by providing users an environment with increased oxygen concentration and humidity. The oxygen enriched air from a gas separation system such as an NGS, can be humidified by the potable water system and directed to the Oxy-Pods.

By increasing the oxygen partial pressure the air, the pods can provide an effective reduction in the negative effects of reduced altitude without increasing the total pressure. This allows the current cabin pressure vessel to be used. Humidifying the air can reduce the uncomfortable side effects of being in a dry environment. In one implementation of the technology a fragrance or scent can be added to the air.

The features, functions, and advantages that have been discussed can be achieved independently in various embodiments or may be combined in yet other embodiments further details of which can be seen with reference to the following description and drawings.

These and other advantageous features of the present invention will be in part apparent and in part pointed out herein below.

### BRIEF DESCRIPTION OF THE DRAWINGS

For a better understanding of the present invention, reference may be made to the accompanying drawings in which:
Fig. 1A is an illustration of a system for providing oxygen enriched air to a user compartment on an aircraft;
Fig. 1B is an illustration of a user compartment;
Fig. 2A - 2E is an illustration of a user support device;
Fig.3 is an illustration of an air humidification system; and
Fig. 4 is an illustration of a process flow.

While the invention is susceptible to various modifications and alternative forms, specific embodiments thereof are shown by way of example in the drawings and will herein be described in detail. It should be understood, however, that the drawings and detailed description presented herein are not intended to limit the invention to the particular embodiment disclosed, but on the contrary, the intention is to cover all modifications, equivalents, and alternatives falling within scope of the present invention as defined by the appended claims.

### DESCRIPTION

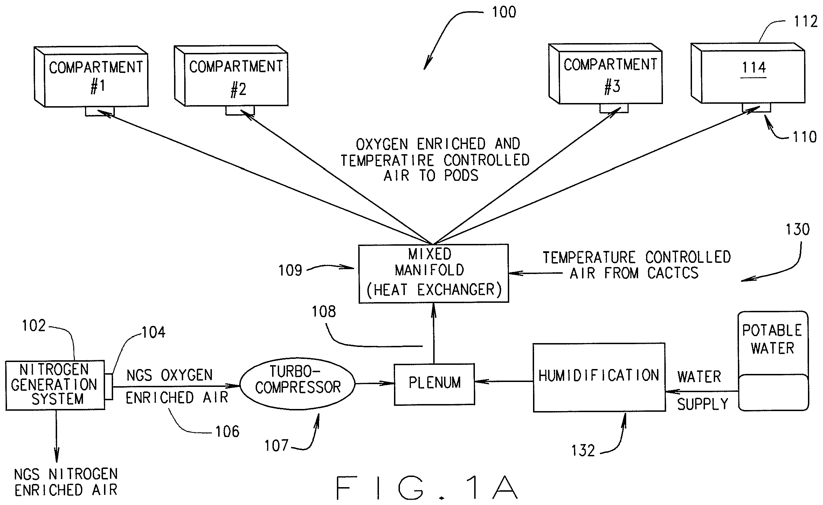

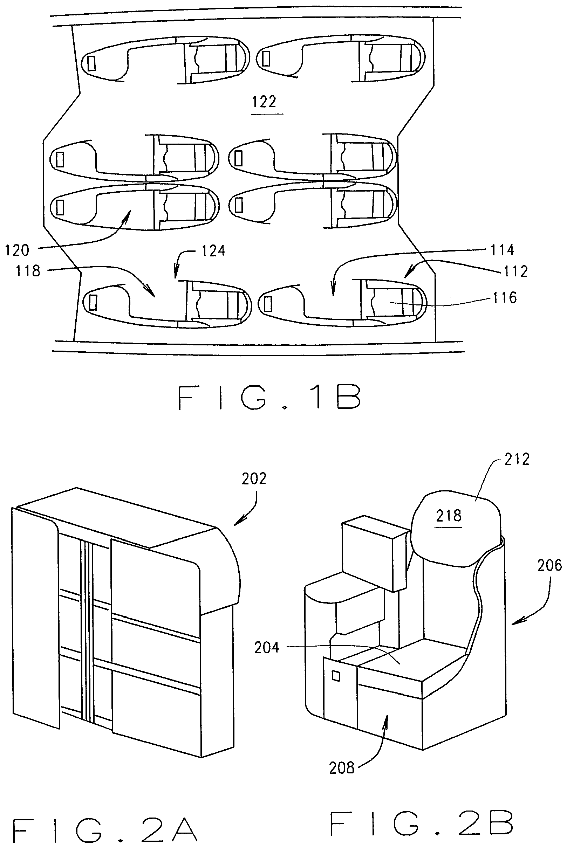

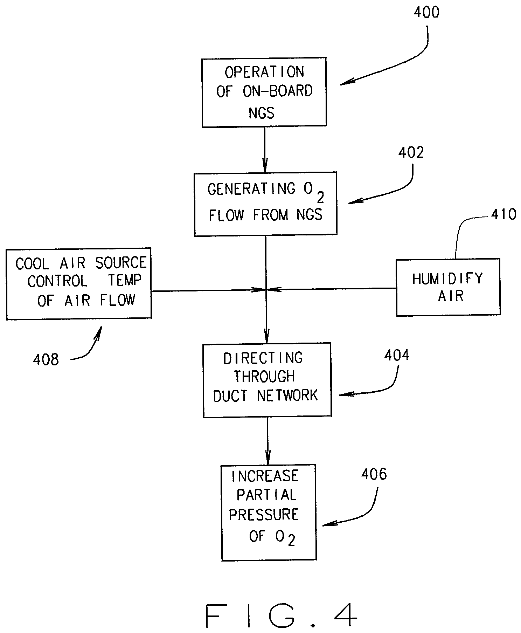

According to the embodiment(s) of the present invention, various views are illustrated in Fig. 1-4 and like reference numerals are being used consistently throughout to refer to like and corresponding parts of the invention for all of the various views and figures of the drawing. Also, please note that the first digit(s) of the reference number for a given item or part of the invention should correspond to the Fig. number in which the item or part is first identified.

One implementation of the present technology includes an oxygen enriched enclosed user compartment which teaches a novel apparatus and method for providing oxygen enriched air that is routed from a gas separation system, such as a nitrogen generating system, to an enclosed user compartment within an aircraft. An enclosed user compartment can be on an air delivery system that is separate from the air delivery system for the passenger cabin and other parts of the aircraft.

The details of the technology and various implementations can be better understood by referring to the figures. Referring to Figs. 1A and 1B, a system 100 for providing an oxygen enriched localized environment in a user compartment, is illustrated which includes a gas separation system 102 having an oxygen output channel 104 that outputs a flow of oxygen enriched air 106. The system further includes a duct network 108 coupled to the oxygen output channel 104 and the duct network is configured to direct the flow of oxygen enriched air through a manifold 109 to a dispenser 110 configured to dispense the flow of oxygen air into the user compartment 114 thereby increasing a partial pressure of oxygen in the user compartment 114. The gas separation system 102 can be, but is not limited to a nitrogen generation system ("NGS") on an aircraft. The dispenser 110 can include one or more of an opening, a vent, a mask, a hood, a nozzle, a valve and a tube. The user compartment 114 can include a user support device 116. The user compartment 114 can be a partially closed volume 118, a closed volume 120, and can include a control for regulating the flow of oxygen enriched air. The control may be operated by the user. An enclosed user compartment 114, can define an enclosed volume (localized environment), that is smaller than, for example, a larger, open area such as a passenger cabin 122 on the aircraft and can make it more practical to provide and oxygen enriched localized environment for a user. The user compartment 114 can have an entry portal 124, for example a door, that can be closed off thereby creating a localized environment for the user within the compartment 114. In a further implementation a turbo-compressor 107 can be utilized to improve the overall performance of the gas separation system when the oxygen enriched air is ducted to cabin pressures when the user compartment 114 is in use. However, 107 is not required for proper operation.

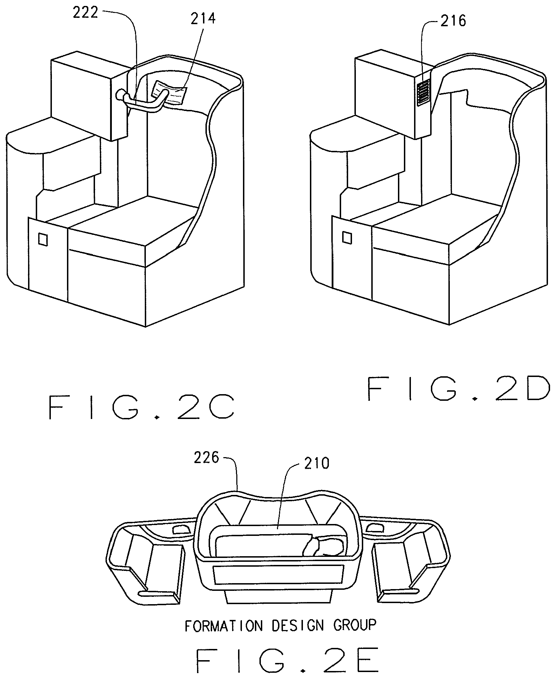

Referring to Fig. 2A through 2E, one implementation of the technology is configured such that the user support device includes one or more of a seat 206 or bench, a foot rest 208, and a bed 210, and where the passenger seating area is an enclosed compartment 114. The user compartment 114, 202 can include a support device 204. The user compartment 114 can enclose the support device thereby creating a localized environment (a smaller volume within a larger volume of the overall user compartment for the individual user or group of users, such as passengers and crew on an aircraft) 112. The support device can be configured to include one or more of an opening, a hood 212, a mask 214, and a vent 216 to deliver the oxygen enriched air to the passenger. The hood 212 can be a retractable canopy 218 structure (awning-like structure) that provides a covering over a head area of the support device. The hood 212 can be utilized to channel the oxygen enriched air and partially contain the oxygen enriched air about the head area of the support device. The hood 212 can contain an internal cavity having a plurality of exit vent holes on the interior wall of the canopy for venting oxygen enriched air to the user head area. The internal cavity of the hood 212 can be attached to a dispenser 110 configured to receive an oxygen enriched air flow delivered to the user compartment 114 and dispense the flow of oxygen enriched air through the exit vent holes. The mask 214 can be configured to cover the mouth and/or nose of a user; and can be attached to a dispenser configured to receive an oxygen enriched air flow delivered to the user compartment 114 and dispense the flow of oxygen enriched air through a tube 222 attached to the mask 214. With another implementation of the technology as disclosed, the user compartment 114 can simply have a vent 216 for directing oxygen enriched air toward the user head area. With yet another implementation of the technology as disclosed, the support device can be a bed 210, which allows the user to lie flat and yet another implementation can provide a separate compartment 226 to contain the bed 210.

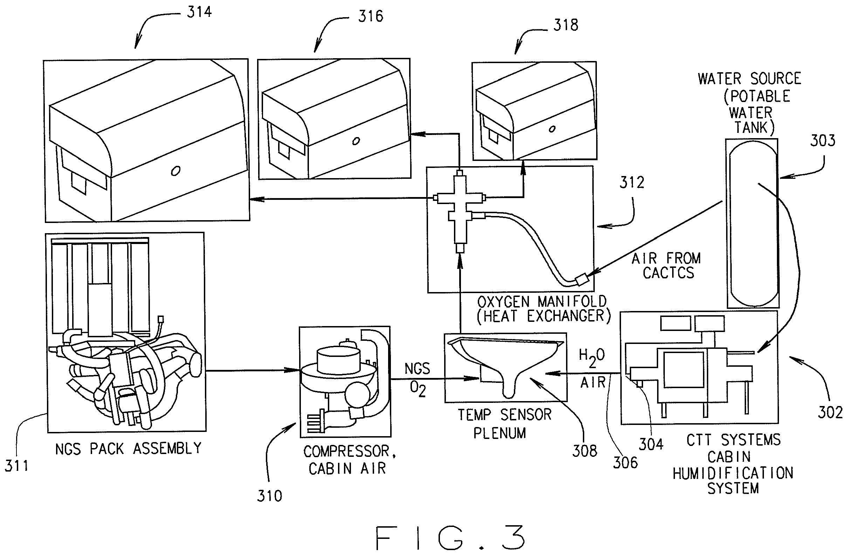

Referring to Fig. 3, one implementation of the technology can include an air humidification system 302 having a humidified air output 304 coupled to the duct network and configured to add humidified air 306 to the flow of oxygen enriched air. The air humidification system can be coupled to a water source 303. To address the temperature of the oxygen enriched air flow which may be too warm, a temperature regulator such as a heat exchanger 312 can be coupled to the duct network and configured to control the temperature of the air flow. A compressor 310 can be included if needed. An oxygen manifold 312 can be used to distribute the oxygen enriched air flow to the various user compartments 314, 316, and 318.

A defined volumetric space of a user compartment can be utilized to define the localized volume to receive the enriched air and can be an apparatus for providing an oxygen enriched localized environment. The localized volume can have a dispenser configured to dispense a flow of oxygen in the localized volume (interior volume of the user compartment) and the localized volume can have an input (dispenser) coupled to a duct network and configured to receive the flow of oxygen enriched air received from an output of a gas separation system 311 such as an NGS system. The dispenser can be in fluid communication with one or more of a vent, a mask, a hood, a nozzle, a valve and a tube. The localized volume of the user compartment can be a user seating area, where the user seating area includes one or more of a user support device, a dispenser and a control for controlling the flow of oxygen. The compartment can be partially or fully enclosed and have an entry, such as a door. The user support device can include one or more of a seat, a bench, a foot rest, and a bed. The duct network attached to the enclosed cabin can be coupled to a heat exchanger configured to control the temperature of the flow of oxygen enriched air and coupled to a humidification system 132 configured to add humidity to the flow of oxygen enriched air.

In yet another implementation of the technology as disclosed is a method for providing an oxygen enriched localized volume, which includes operating a gas separation system 400, such as an NGS system, which separates out oxygen and generates an oxygen flow 402. The method further includes directing a flow of oxygen 404 from an oxygen output of the gas separation system through a duct network to a dispenser configured to dispense the flow of oxygen to a localized volume, and thereby increasing a partial pressure of oxygen 406 in the localized volume. The process can further include regulating the temperature of the flow of oxygen enriched air 408 with a temperature regulator such as a heat exchanger coupled to the duct network, and humidifying the flow of oxygen 410 by adding a humidified air flow from a humidification system.

The various implementations and examples shown above illustrate a method and system for delivering an oxygen enriched environment in a localized volume. A user of the present method and system may choose any of the above implementations, or an equivalent thereof, depending upon the desired application. In this regard, it is recognized that various forms of the subject technology's method and system could be utilized without departing from the present implementations as described and claimed herein.

As is evident from the foregoing description, certain aspects of the present implementation are not limited by the particular details of the examples illustrated herein, and it is therefore contemplated that other modifications and applications, or equivalents thereof, will occur to those skilled in the art. It is accordingly intended that the claims shall cover all such modifications and applications that do not depart from the scope of the present implementation. Accordingly, the specification and drawings are to be regarded in an illustrative rather than a restrictive sense.

Certain systems, apparatus, applications or processes are described herein as including a number of modules. A module may be a unit of distinct functionality that may be presented in software, hardware, or combinations thereof. When the functionality of a module is performed in any part through software, the module includes a computer-readable medium. The modules may be regarded as being communicatively coupled. The inventive subject matter may be represented in a variety of different implementations of which there are many possible permutations.

The methods or processes described herein do not have to be executed in the order described, or in any particular order. Moreover, various activities described with respect to the methods identified herein can be executed in serial or parallel fashion. In the foregoing Detailed Description, it can be seen that various features are grouped together in a single implementation for the purpose of streamlining the disclosure. This method of disclosure is not to be interpreted as reflecting an intention that the claimed embodiments require more features than are expressly recited in each claim. Rather, as the following claims reflect, inventive subject matter may lie in less than all features of a single disclosed embodiment. Thus, the following claims are hereby incorporated into the Detailed Description, with each claim standing on its own as a separate embodiment.

In an example embodiment, the machine operates as a standalone device or may be connected (e.g., networked) to other machines. Further, while only a single machine is illustrated, the term "machine" shall also be taken to include any collection of machines that individually or jointly execute a set (or multiple sets) of instructions to perform any one or more of the methodologies discussed herein.

As is evident from the foregoing description, certain aspects of the present technology and its various implementations are not limited by the particular details of the examples illustrated herein, and it is therefore contemplated that other modifications and applications, or equivalents thereof, will occur to those skilled in the art. It is accordingly intended that the claims shall cover all such modifications

## Claims

1. A localized user environment on system (100) for providing an oxygen enriched an aircraft having a passenger cabin (122) comprising:
a gas separation system (102) having an oxygen output channel (104) for outputting a flow of oxygen enriched air (106), wherein the gas separation system (102) is a nitrogen generation system ; and
a partially, or fully, enclosed user compartment (114) for a selected passenger, the user compartment (114) having a user support device (116) and an oxygen enriched air dispenser (110), and
wherein the user compartment (114) includes a user-operable control for regulating the flow of oxygen enriched air (106); and
a duct network (108) coupled to the oxygen output channel (104) and comprising a manifold (109), the duct network being configured to direct the flow of oxygen enriched air (106) through the manifold (109) to the dispenser (110), which dispenser (110) is configured to receive and dispense the flow of oxygen enriched air (106) to a localized volume in the user compartment (114) thereby increasing the partial pressure of oxygen in the user compartment (114).

2. The system (100) as recited in Claim 1, wherein the user compartment (114) is a partially closed compartment (118).

3. The system (100) as recited in one of Claims 1 to 2, further comprising:
an air humidification system having a humidified air output coupled to the duct network and configured to humidify the flow of oxygen enriched air (106).

4. The system (100) as recited in one of Claims 1 to 3, further comprising:
a temperature regulator coupled to the duct network and configured to control the temperature of the flow of oxygen enriched air.

5. The system of claim 1, further comprising:
a turbo compressor (107) configured to improve an overall performance of the gas separation system (12) when the oxygen enriched air is ducted to cabin pressures when the user compartment (114) is in use.

6. A method for providing an oxygen enriched localized environment in a user compartment on an aircraft having a passenger cabin (122) comprising:
directing a flow of oxygen enriched air from an oxygen output of a gas separation system (12), wherein the gas separation system (102) is a nitrogen generation system t, through a duct network (108) via a manifold (019) to an oxygen enriched air dispenser (110), wherein the dispenser (110) receives and dispenses the flow of oxygen enriched air to a localized volume in a partially, or fully, enclosed user compartment (114) for a selected passenger, thereby increasing the partial pressure of oxygen in the user compartment (114), wherein the enclosed user compartment (114) has a user support device (116) and the oxygen enriched air dispenser (110), and wherein the enclosed user compartment (114) includes a user-operable control for regulating the flow of oxygen enriched air (106).

7. The method as recited in Claim 6, further comprising:
regulating the temperature of the flow of oxygen with a heat exchanger coupled to the duct network.

8. The method as recited in Claim 6 or 7, further comprising:
humidifying the air in the user compartments.

9. The method as recited in one of the Claim 6 to 8 further comprising: adding a fragrance to the air.

10. An aircraft incorporating the system of any of claims 1 to 6.

## Patentansprüche

1. System (100) zum Vorsehen einer Sauerstoff-angereicherten lokalisierten Nutzerumgebung in einem Luftfahrzeug, das eine Passagierkabine (122) aufweist, aufweisend:
ein Gastrennsystem (102) mit einem Sauerstoffausgabekanal (104) zum Ausgeben einer Strömung von Sauerstoff-angereicherter Luft (106), wobei das Gastrennsystem (102) ein Stickstofferzeugungssystem ist; und
ein teilweise oder vollständig umschlossenes Nutzerabteil (114) für einen ausgewählten Passagier, wobei das Nutzerabteil (114) eine Nutzertragvorrichtung (116) und eine Verteilvorrichtung (110) für Sauerstoff-angereicherte Luft aufweist, und
wobei das Nutzerabteil (114) eine Nutzer-bedienbare Steuerung zum Regulieren der Strömung von Sauerstoff-angereicherten Luft (106) umfasst; und
ein Kanalnetzwerk (108), das an den Sauerstoffausgabekanal (104) gekoppelt ist und das eine Sammelleitung (109) aufweist, wobei das Kanalnetzwerk eingerichtet ist, die Strömung von Sauerstoff-angereicherten Luft (106) durch die Sammelleitung (109) an die Verteileinrichtung (110) zu leiten, wobei die Verteileinrichtung (110) eingerichtet ist, die Strömung von Sauerstoff-angereicherter Luft (106) zu empfangen und an ein lokalisiertes Volumen in dem Nutzerabteil (114) zu verteilen, wodurch der partielle Sauerstoffdruck in dem Benutzerabteil (114) erhöht wird.

2. System (100) nach Anspruch 1, wobei das Benutzerabteil (114) ein teilweise umschlossenes Abteil (118) ist.

3. System (100) nach Anspruch 1 oder 2, das ferner aufweist:
ein Luftbefeuchtungssystem mit einer Ausgabe für befeuchtete Luft, das an das Kanalnetzwerk gekoppelt ist und das eingerichtet ist, die Strömung von Sauerstoff-angereicherter Luft (106) zu befeuchten.

4. System (100) nach einem der Ansprüche 1 bis 3, das ferner aufweist:
einen Temperaturregler, der an das Kanalnetzwerk gekoppelt ist und der eingerichtet ist, die Temperatur der Strömung von Sauerstoff-angereicherter Luft zu steuern.

5. System nach Anspruch 1, das ferner aufweist:
einen Turbokompressor (107), der eingerichtet ist, eine Gesamtleistung des Gastrennsystems (12) zu verbessern, wenn die Sauerstoff-angereicherte Luft auf Kabinendruck geleitet wird, wenn das Nutzerabteil (114) verwendet wird.

6. Verfahren zum Vorsehen einer Sauerstoff-angereicherten, lokalisierten Umgebung in einem Nutzerabteil in einem Luftfahrzeug, das eine Passagierkabine (122) aufweist, aufweisend:
Leiten einer Strömung von Sauerstoff-angereicherter Luft aus einer Sauerstoffausgabe eines Gastrennsystems (12), wobei das Gastrennsystem (12) ein Stickstofferzeugungssystem ist, durch ein Kanalnetzwerk (108) über eine Sammelleitung (109) an eine Verteileinrichtung (110) für Sauerstoff-angereicherte Luft, wobei die Verteileinrichtung (110) die Strömung von Sauerstoff-angereicherter Luft empfängt und an ein lokalisiertes Volumen in einem teilweise oder vollständig umschlossenen Benutzerabteil (114) für einen ausgewählten Passagier verteilt, wodurch der partielle Sauerstoffdruck in dem Nutzerabteil (114) erhöht wird, wobei das umschlossene Nutzerabteil (114) eine Nutzertragvorrichtung (116) und die Verteileinrichtung (110) für die Sauerstoff-angereicherte Luft aufweist, und wobei das umschlossene Nutzerabteil (114) eine Nutzer-bedienbare Steuerung zum Regulieren der Strömung von Sauerstoff-angereicherter Luft (106) umfasst.

7. Verfahren nach Anspruch 6, das ferner aufweist:
Regulieren der Temperatur der Sauerstoffströmung mit einem Wärmetauscher, der an das Kanalnetzwerk koppelt.

8. Verfahren nach Anspruch 6 oder 7, das ferner aufweist: Befeuchten der Luft in den Nutzerabteilen.

9. Verfahren nach einem der Ansprüche 6 bis 8, das ferner aufweist: Hinzufügen eines Dufts zur Luft.

10. Luftfahrzeug, in das System nach einem der Ansprüche 1 bis 6 integriert hat.

## Revendications

1. Système (100) pour fournir un environnement d'utilisateur localisé enrichi en oxygène sur un aéronef possédant une cabine (122) de passagers comprenant :
un système de séparation des gaz (102) comportant un canal (104) de sortie d'oxygène pour sortir un flux d'un air enrichi en oxygène (106), le système de séparation des gaz (102) étant un système de production d'azote ; et
un compartiment (114) d'utilisateur partiellement, ou entièrement, enfermé pour un passager sélectionné, le compartiment (114) d'utilisateur possédant un dispositif (116) de support d'utilisateur et un distributeur (110) d'air enrichi en oxygène, et
dans lequel le compartiment d'utilisateur (114) comprend une commande actionnable par l'utilisateur pour réguler le flux d'air enrichi en oxygène (106) ; et
un réseau de conduites (108) raccordé au canal (104) de sortie d'oxygène et comprenant un collecteur (109), le réseau de conduites étant conçu pour diriger le flux d'air enrichi en oxygène (106) à travers le collecteur (109) vers le distributeur (110), lequel distributeur (110) est conçu pour recevoir et distribuer le flux d'air enrichi en oxygène (106) vers un volume localisé dans le compartiment (114) d'utilisateur, ce qui permet d'augmenter la pression partielle d'oxygène dans le compartiment (114) d'utilisateur.

2. Système (100) selon la revendication 1, dans lequel le compartiment (114) d'utilisateur est un compartiment partiellement fermé (118).

3. Système (100) selon l'une des revendications 1 et 2, comportant en outre :
un système d'humidification de l'air possédant une sortie d'air humidifié raccordé au réseau de conduites et conçu pour humidifier le flux d'air enrichi en oxygène (106).

4. Système (100) selon l'une des revendications 1 à 3, comportant en outre :
un régulateur de température raccordé au réseau de conduites et conçu pour réguler la température du flux d'air enrichi en oxygène.

5. Système selon la revendication 1, comportant en outre :
un turbocompresseur (107) conçu pour améliorer une performance globale du système de séparation des gaz (12) lorsque l'air enrichi en oxygène est conduit à des pressions de cabine lorsque le compartiment (114) d'utilisateur est en cours d'utilisation.

6. Procédé permettant de fournir un environnement localisé enrichi en oxygène dans un compartiment d'utilisateur sur un aéronef possédant une cabine (122) de passagers consistant à :
orienter un flux d'air enrichi en oxygène depuis une sortie d'oxygène d'un système de séparation des gaz (12), le système de séparation des gaz (102) étant un système de production d'azote, à travers un réseau de conduites (108) par le biais d'un collecteur (019) vers un distributeur (110) d'air enrichi en oxygène, le distributeur (110) recevant et distribuant le flux d'air enrichi en oxygène vers un volume localisé dans un compartiment (114) d'utilisateur partiellement, ou entièrement, enfermé pour un passager sélectionné, ce qui permet d'augmenter la pression partielle d'oxygène dans le compartiment (114) d'utilisateur, le compartiment (114) d'utilisateur enfermé possédant un dispositif (116) de support d'utilisateur et le distributeur (110) d'air enrichi en oxygène, et le compartiment (114) d'utilisateur enfermé comprenant une commande actionnable par l'utilisateur pour réguler le flux d'air enrichi en oxygène (106).

7. Procédé selon la revendication 6, consistant en outre à :
réguler la température du flux d'oxygène avec un échangeur de chaleur relié au réseau de conduites.

8. Procédé selon la revendication 6 ou 7, consistant en outre à : humidifier l'air dans les compartiments d'utilisateur.

9. Procédé selon l'une des revendications 6 à 8 consistant en outre à : ajouter un parfum à l'air.

10. Aéronef intégrant le système selon l'une quelconque des revendications 1 à 6.
